Europäisches Patentamt

European Patent Office

Office européen des brevets

(19)

(11) Publication number: **0 189 160**
A2

# (12) EUROPEAN PATENT APPLICATION

(21) Application number: 86100679.9

(51) Int. Cl.⁴: **A 23 L 1/30**

(22) Date of filing: 20.01.86

(30) Priority: 22.01.85 US 693081

(43) Date of publication of application: 30.07.86
Bulletin 86/31

(84) Designated Contracting States: **AT BE CH DE FR GB IT
LI LU NL SE**

(71) Applicant: **ABBOTT LABORATORIES, 14th Street and
Sheridan Road North St, North Chicago
Illinois 60064 (US)**

(72) Inventor: **Hull, Samuel F., 438 Blandings Court,
Worthington, OH (US)**
Inventor: **Hecker, Authur L., 272 Lambourne Avenue,
Worthington Ohio (US)**
Inventor: **Scaman, Patricia A., 40 Northridge Road,
Columbus Ohio (US)**
Inventor: **Mohammed, Kasheed, 2318 Wickliffe Road,
Columbus Ohio (US)**

(74) Representative: **Modiano, Guido et al, MODIANO, JOSIF,
PISANTY & STAUB Modiano & Associati Via
Meravigli, 16, I-20123 Milan (IT)**

(54) High fat, low carbohydrate enteral nutritional formula.

(57) An improved high fat, low carbohydrate enteral nutritional
composition containing fat, carbohydrate, protein, vitamins
and minerals is disclosed which is utilized in the dietary
management of medical patients requiring a reduced carbohydrate intake.

EP 0 189 160 A2

HIGH FAT, LOW CARBOHYDRATE ENTERAL NUTRITIONAL FORMULA

Field of the Invention

The invention relates to improved enteral nutritional formulas and more particularly to formulas which provide a high fat, low carbohydrate diet.

Background of the Invention

A primary treatment for patients with respiratory insufficiency is ventilator support and medication. More recently nutritional support has been recognized as another important treatment for these patients. Nutritional support helps meet caloric needs for respiration, maintains respiratory muscle structure, and prevents malnutrition and the associated increased susceptibility to infection.

Since patients with respiratory insufficiency have an impaired ability to excrete carbon dioxide through the lungs, it is desirable to reduce carbon dioxide production in these patients. Manipulation of fat and carbohydrate levels in patient nutritional intake has been found to increase or reduce carbon dioxide production. The ratio of carbon dioxide to oxygen consumed per calorie in the complete combustion of fat is lower than that for either carbohydrate or protein. Therefore, a high fat diet can provide adequate calories with less carbon dioxide production.

Askanazi, et al., Anesthesiology 54:373-377 (1981) reported that in nutritionally depleted and acutely ill patients, use of fat emulsions in parenteral nutrition resulted in a significant reduction in carbon dioxide production and ventilatory requirements. However, several problems occur in providing high fat feedings through parenteral nutrition. These include the altered metabolism of fat, increased patient costs and risks associated with parenteral feedings. Also, a nutritionally adequate high fat parenteral feeding is difficult to achieve.

Heymsfield et al., Am. J. Clin. Nutr. 40:116-130 (1984) utilized a high fat, low carbohydrate enteral formula which decreased carbon dioxide production in undernourished patients. This formula was prepared by weighing separate modular components including a whey protein, maltodextrin, long chain triglycerides and safflower oil, vitamins, minerals and water and blending to form a mixture having a caloric distribution of 15%, protein, 35% carbohydrate and 50% fat.

Similarly, Garfinkel et al., Clin. Nutr. Newsletter (June 1983) have prepared an enteral formula by mixing two formulas, one being a carbohydrate-free formula and the other consisting of glucose polymers. This mixed formula had a caloric distribution of 14% protein, 31% carbohydrate and 55% fat, and resulted in reduced carbon dioxide production in a patient with lung disease.

The problem with these previous high fat, low carbohydrate formulas is that they are expensive and time-consuming to prepare since they require different component parts and must be weighed and thoroughly blended prior to use. The optimal formula is often difficult to achieve and may not provide a nutritionally adequate or organoleptically acceptable diet. Also, these formulas cannot be prepared in advance and stored for long periods due to contamination problems and because the component parts fall out of solution or fat floats to the top of the solution.

Summary of the Invention

The present invention is an improved nutritionally complete enteral formula for the dietary management of patients requiring a low carbohydrate intake such as during respiratory insufficiency. The improved formula comprises fats, carbohydrates, proteins, vitamins and minerals, and utilizes a unique emulsification system based on the utilization of an emulsifier and a micronized calcium salt. The formula provides a shelf-stable, organoleptically acceptable formula which requires no premixing of any of the component parts of the formula.

Detailed Description of the Invention

The fat source for the high fat, low carbohydrate formula may be any acceptable fat source utilized in nutritional formulas including corn oil, coconut oil, soybean oil, medium chain triglyceride oil, cottonseed oil, safflower oil, sunflower seed oil or a combination of these fat sources. Preferably the fat source is corn oil. The amount of fat source present in the formula may be from about 45% to about 60% of the total calories of the formula, and preferably the fat source comprises approximately 55% of the total calories.

The carbohydrate source of the formula may be sucrose, corn syrup, fructose, dextrose or other nutritionally acceptable carbohydrate sources. Acceptable carbohydrate sources for the present formula have a dextrose equivalent from about 5 to about 42. Dextrose equivalent (D.E.) is a measure of the total reducing power of a carbohydrate source expressed as anhydrous dextrose and calculated as a percent of the total solids. The preferred carbohydrate source comprises sucrose and corn syrup having a dextrose equivalent of about 15-18.

Artificial sweeteners could also be used in the present formula to replace or partially replace the carbohydrate source. Examples of suitable artificial sweeteners include saccharine, polydextrose and methyl aspartyl-phenylalanine, which lower the osmolality and enhance the organoleptic quality of the formula.

The amount of carbohydrate source present in the formula may range from about 0 to about 30% of the total calories of the formula. Preferably, the carbohydrate source comprises approximately 28% of the total calories of the formula.

The protein source for the high fat, low carbohydrate formula may be any suitable protein source for a nutritional formula such as casein, whey, soy protein, or protein hydrolysates. The preferred source of protein for the present formula is sodium calcium caseinate and sodium caseinate. The protein source of the formula may be provided in the range of about 8% to about 25% of total calories and is preferably provided as about 17% of total calories of the formula.

The emulsification system of the high fat, low carbohydrate formula is based on an emulsifier plus a micronized calcium salt. The emulsifier may be any suitable fat emulsifier such as mono- and di-glycerides, egg lecithin or soybean lecithin. The preferred emulsifier is soybean lecithin.

To inhibit thixotrophy due to high fat content of the formula, the fat to emulsifier ratio may be in the range from about 1 part fat to about .05 to 1 part emulsifier and the optimal fat to emulsifier ratio is 1.0 to 0.331.

In addition, a micronized calcium salt is utilized in the emulsification system of the formula. Examples of suitable calcium salts include micronized tricalcium phosphate, micronized calcium citrate, monobasic calcium phosphate and combinations of these calcium salts. The preferred calcium salt for the high fat, low carbohydrate formula is micronized tricalcium phosphate (TCP). The preferred micronized TCP particle size ranges from about 0.5 to about 1.5 um median particle size, and is prepared by pulverizing crude TCP (median particle size 2.8 um).

The formula contains stabilizers such as carrageenan and xanthum gum which increase the viscosity of the formula further preventing sedimentation. In addition, the formula contains vitamins and minerals.

A preferred high fat, low carbohydrate formula of the invention has the composition set forth in Table I.

## Table I

| Ingredients | Per Liter (1500 K calories) Preferred Amount | |
|---|---:|---|
| Water | 758.72 | grams |
| Corn Oil | 95.70 | grams |
| Sodium Caseinate | 49.27 | grams |
| Sodium Calcium Caseinate | 26.06 | grams |
| Corn Syrup Solids (D.E. 15-18) | 47.19 | grams |
| Sucrose | 54.54 | grams |
| Tricalcium Phosphate (micronized) | 3.22 | grams |
| Magnesium Chloride | 3.88 | grams |
| Potassium Citrate | 3.46 | grams |
| Sodium Citrate | 1.90 | grams |
| Sodium Chloride | 0.53 | grams |
| Ferrous Sulfate | 94.94 | mgs |
| Zinc Sulfate | 94.94 | mgs |
| Cupric Sulfate | 10.52 | mgs |
| Manganese Sulfate | 7.89 | mgs |
| Soy Lecithin | 3.49 | grams |
| Ascorbic Acid | 0.62 | grams |
| Choline Chloride | 0.78 | grams |
| Oil Soluble Vitamins | 84.87 | mgs |
|     Alpha-Tocopheryl Acetate | | |
|     Vitamin A Palmitate | | |
|     Phylloquinone | | |
|     Vitamin $D_3$ | | |
| Water Soluble Vitamins | 0.15 | grams |
|     Niacinamide | | |
|     Calcium Pantothenate | | |
|     Thiamine Chloride Hydrochloride | | |
|     Pyridoxine Hydrochloride | | |
|     Riboflavin | | |
|     Folic Acid | | |
|     Biotin | | |
| Cyanocobalamin | 0.016 | mgs |
| Carrageenan | 42.18 | mgs |

The following is an example processing method for the nutritional formula of the invention:

I.    Preblends

The following mixtures are pre-blended separately:

A.    Oil Blend

In this preblend, 27.75 lbs. of corn oil are placed in a mixing kettle and heated while agitating to a temperature range of from 130°F to 160°F with a preferred range of from 143°F to 150°F. To the heated corn oil, 0.82 lbs. of soybean lecithin emulsifier are added and agitated until dissolved. Next, 10.38 gm of oil soluble vitamins A, $D_3$, E and $K_1$ are added and agitated thoroughly. A temperature range of from 130°F to 160°F is maintained until the oil blend is used. It should be noted that the oil blend must be used within 12 hours of the time it is made to prevent rancidity of the oil and loss of the oil soluble vitamins' potency. The level of emulsifier is higher than the levels found in most conventional nutritional formulas because of high fat content. A ratio of 1.00 part corn oil to 0.331 part of emulsifier produces acceptable fat globules of less than two microns without any clustering of the globules in the homogenized product.

B.    Soluble Mineral Solution

In a mixing kettle, 34.98 lbs. of filtered tap water are heated with constant agitation to a temperature range of from 135°F to 175°F with a preferred temperature range of from 150°F to 160°F. The required amounts of the following mineral salts are dissolved in the heated water in the following sequence:

| | |
|---|---:|
| Magnesium Chloride 6 $H_2O$ | 500.67 gm |
| Potassium Citrate $H_2O$ | 471.87 gm |
| Ferrous Sulfate 7 $H_2O$ | 11.95 gm |
| Zinc Sulfate 7 $H_2O$ | 12.40 gm |
| Copper Sulfate 5 $H_2O$ | 1.39 gm |
| Manganese Sulfate $H_2O$ | 1.01 gm |
| Sodium Chloride | 67.49 gm |

The materials are agitated in the heated water until dissolved. The preferred temperature range of from 150°F to 160°F is maintained in the mineral solution mixing kettle with constant agitation. It should be noted that the sequence in which the soluble minerals are added allows the iron to remain in the ferrous ion state thereby facilitating optimum physiological absorbability.

C.  Insoluble Mineral Solution

In a mixing kettle, 29.92 lbs. of filtered tap water are heated with constant agitation to a temperature range of from 90°F to 160°F with a preferred range of from 110°F to 140°F. To the heated water, 244.25 gm of sodium citrate and 416.14 gm of micronized tricalcium phosphate (M-TCP) are added and agitated for a minimum of 10 minutes. The preferred temperature range of from 110°F to 140°F is maintained with agitation. It should be noted that the use of M-TCP with a median particle size of not greater than 1.5 micron and with a preferred particle size of not greater than 1.0 micron reduces the rate of sedimentation, thus allowing the product to deliver 100% of calcium and phosphorus and other nutrients to the consumer after 24 hours of quiescent standing.

D. Carbohydrate Blend

13.42 lbs. of 15 dextrose equivalent corn syrup solids sold under the trademark Lodex 15 by American Maize Co. of Hammond, Indiana and 15.51 lbs. of sucrose are separately preweighed and covered to keep dry until used.

E. Protein Slurry

In a mixing kettle, 130 lbs. of filtered tap water are heated with constant agitation to a temperature range of from 135°F to 175°F with a preferred temperature range of from 145°F to 165°F. The specified amounts of the following ingredients are dry blended by hand and slowly added to the heated water with agitation:

| Sodium Calcium Caseinate | 7.41 lbs. |
| Sodium Caseinate | 14.00 lbs. |
| Calcium Carrageenan | 5.40 gm. |

This mixture is maintained at the preferred temperature range of from 145°F to 165°F while agitating. Blending should begin within 2 hours after the protein slurry has been completed. It should be noted that the protein slurry may remain for as long as 4 hours before blending into the nutritional formula, but viscosity increases in the slurry will hinder processing. The carrageenan is added with the caseinates allowing the caseinates to stay in suspension. The protein slurry is kept separate from the carbohydrates and mineral solutions in order to reduce the browning caused by the Maillard reaction.

## II. Blending

The insoluble mineral solution is transferred into the soluble mineral solution mixing kettle while agitating. The carbohydrate blend is slowly added and agitated until dissolved. The mineral and carbohydrate slurry is maintained at a temperature range of from 130°F to 170°F with a preferred range of from 140°F to 160°F while agitating. The contents of the mineral and carbohydrate slurry are transferred into the protein slurry mixing kettle while agitating. The oil blend is immediately added while agitating. After agitating for 10 minutes, a sample is taken for pH measurement. The pH range is from 6.50 to 6.90 with a preferred range of from 6.60 to 6.80. If the pH is not in range, adjust using one normal potassium hydroxide (1N KOH) or one normal citric acid (1N citric acid). The blended mixture is maintained at a temperature range of from 135°F to 175°F with a preferred temperature range of from 155°F to 165°F. It should be noted that blending and processing should begin within 2 hours from the time the pH has been verified to avoid fat separation in the unhomogenized mix and to reduce air incorporation from agitation.

## III. Homogenization Procedure

The blended mix is heated to a temperature range of from 145°F to 175°F with a preferred range of from 155°F to 165°F through a plate or coil heater, then pumped through a deaerator with a vacuum range of from 8 inches to 17 inches of mercury with a preferred range of from 10 inches to 15 inches of mercury. The blended mix is emulsified in a single stage homogenizer at a pounds per square inch (PSIG) range of from 700

-11-

0189160

PSIG to 1200 PSIG with a preferred range of from 980 PSIG to 1100 PSIG. The blended mix is then homogenized in a dual stage homogenizer at a first stage PSIG range of from 3500 PSIG to 4200 PSIG with a preferred PSIG range of from 3900 PSIG to 4200 PSIG and a second stage PSIG range of from 250 PSIG to 700 PSIG with a preferred PSIG range of from 400 PSIG to 600 PSIG. The mix passes through a hold tube with a 16 second hold time at a temperature range of from 165°F to 190°F with a preferred temperature range of from 165°F to 175°F. This step constitutes high temperature short time (HTST) pasteurization. The mix is pumped through a plate cooler to assure a product temperature range of from 34°F to 48°F with a preferred product temperature range of from 39°F to 44°F. From the cooler board, the mix is pumped into a refrigerated hold tank capable of maintaining the preferred product temperature with constant agitation. The pH of the mix is measured and corrected if necessary to 6.60 to 6.80 using 1N KOH or 1N citric acid.

IV. Water Soluble Vitamin Solution

In a mixing kettle, 3 lbs. of filtered tap water are maintained at a temperature range of from 40°F to 90°F with a preferred temperature range of from 60°F to 80°F with constant agitation. The required amounts of the folloiwng ingredients are added to the water with agitation:

| All Remaining Water Soluble Vitamins | 18.59 gm |
|---|---|
| Ascorbic Acid | 80.30 gm |
| Choline Chloride | 100.37 gm |

When all ingredients are dissolved, a sample of the vitamin solution is measured for pH. The vitamin solution pH range is from 5.50 to 13.00 with a preferred pH range of from 6.00 to 12.00. If the pH is not in range, adjust using 1N KOH or 1N citric acid. After an acceptable pH range has been attained, all of the vitamin solution is slowly added to the processed mix in the hold tank with constant agitation. It should be noted that the pH range of the vitamin solution is critical, as a low pH will cause denaturation of the protein in the product.

V.  Vanilla Flavor System

In a mixing kettle, 2.5 lbs. of filtered tap water are maintained at a temperature range of from 40°F to 90°F with a preferred temperature range of from 60°F to 80°F with constant agitation. 0.33 lb. of vanilla flavor is added to the water and agitated for a minimum of 5 minutes and then slowly added to the mix in the hold tank with constant agitation. Other suitable flavors could be added to provide variety and to improve organoleptic psychosensory acceptability.

VI.  Final Product pH and Total Solids Adjustments

21.4 lbs. of filtered tap water and 2.4 lbs. of 1N KOH are added to the blended mix in the hold tank with constant agitation in order to maintain the pH range of from 6.50 to 6.90 with a preferred pH range of from 6.60 to 6.80 and to assure a total solids range of from 24.10% to 27.30% with a preferred total solids range of about 25-26%.

VII.  Filling and Sterilization

Containers such as cans or glass bottles are filled with the liquid formula and sterilized according to FDA guidelines. While the high fat, low carbohydrate formula is preferably provided in a ready-to-feed form, it may also be concentrated by increasing the percent total solids or spray-dried to powder form by procedures which are well known to those skilled in the art. The concentrate or powder are then reconstituted for feeding by adding water.

The following examples illustrate the clinical efficacy of the high fat, low carbohydrate formula:

Example 1

The effects of the formula were evaluated in 14 ambulatory patients with chronic obstructive pulmonary disease. All patients had arterial $PCO_2$ of greater than 45 mmHg without metabolic alkalosis as a cause of carbon dioxide retention. In addition to the high fat, low carbohydrate formula, a high carbohydrate, low fat and a conventional enteral formula with a mixed caloric distribution were evaluated. The liquid diets were consumed as the sole source of nutrition. Respiratory quotient decreased significantly for the high fat, low carbohydrate diet of the present invention when compared to the other two formulas. Carbon dioxide production and arterial carbon dioxide tension decreased with the high fat, low carbohydrate diet. All measured nutritional parameters were maintained during all three diet periods including blood chemistries, nitrogen balance, and anthropometric measures. This study demonstrates that the formula decreases carbon dioxide production in ambulatory patients while maintaining nutritional status.

## Example 2

Seven patients with respiratory failure requiring mechanical ventilation received either the high fat, low carbohydrate formula or a conventional parenteral or enteral diet. The high fat, low carbohydrate diet resulted in decreased carbon dioxide production, blood carbon dioxide tension, minute ventilation and respiratory quotient. In addition, total days of mechanical ventilatory support decreased when the high fat formula was consumed. Based on these results, the formula is beneficial for dietary management of patients requiring ventilatory support.

The advantages of the present invention include 1) a formula that requires no pre-weighing or blending of separate components, and 2) a formula that is shelf stable, stays in solution and is non-browning.

While specific examples have been given to illustrate the invention, it is to be understood that those skilled in the art will recognize variations without departing from the spirit and scope of the invention.

0189160

CLAIMS:

1. In a high fat, low carbohydrate nutritional formula comprising fats, carbohydrates, proteins, vitamins and minerals, the formula having a caloric distribution of about 45-60% fat, 0-30% carbohydrate and 8-25% protein, the improvement wherein the formula further comprises an emulsifier and a micronized calcium salt.

2. The nutritional formula of claim 1 wherein the caloric distribution of the formula comprises about 55% fat, about 28% carbohydrate and about 17% protein.

3. The nutritional formula of claim 1 wherein the calcium salt is micronized tricalcium phosphate.

4. The nutritional formula of claim 3 wherein the micronized tricalcium phosphate has a median particle size of about 0.5 to about 1.5 um.

5. The nutritional formula of claim 1 wherein the fat to emulsifier ratio is about 1.0 part fat to about .05-1.0 part emulsifier.

6. The nutritional formula of claim 5 wherein the fat to emulsifier ratio is 1.0 to 0.331.

7. The nutritional formula of claim 6 wherein the fat comprises corn oil, the carbohydrate comprises sucrose and corn syrup, and the protein comprises sodium calcium caseinate and sodium caseinate.

8. The nutritional formula of claim 7 wherein the corn syrup has a dextrose equivalent of about 15-18.

9. The nutritional formula of claim 7 wherein the emulsifier comprises soybean lecithin.

0189160

10. The nutritional formula of claim 7 having a pH from about 6.5 to about 6.9.